# EUROPÄISCHE PATENTANMELDUNG

(11) **EP 4 001 717 A1**
(43) Veröffentlichungstag der Anmeldung: **25.05.2022**
(21) Anmeldenummer: 20209100.5
(22) Anmeldetag: 20.11.2020
(51) Int. Cl.: F16K 27/02, F16K 41/02, F16K 41/10, F16L 23/032

(54) **VENTIL**

(71) Anmelder: Gysi Management AG, 5022 Rombach (CH)
(72) Erfinder: Gysi, Franz, 5022 Rombach (CH)
(74) Vertreter: Herrmann, Johanna

(57) **Zusammenfassung**

Ein Ventil (1) enthält ein Ventilgehäuse (10), wobei das Ventilgehäuse (10) einen Einlassstutzen (11), einen Auslassstutzen (12), einen Anschlussstutzen (13) für eine Betätigungsvorrichtung (6) enthält. Eine Fluideintrittsöffnung (15) ist im Einlassstutzen (11) angeordnet, eine Fluidaustrittsöffnung (16) ist im Auslassstutzen (12) angeordnet. Im Inneren des Ventilgehäuses (10) erstreckt sich ein Fluidkanal (14) von der Fluideintrittsöffnung (15) zur Fluidaustrittsöffnung (16), wobei im Fluidkanal (14) ein Ventilsitz (17) angeordnet ist, sodass der Fluidkanal (14) mittels eines durch den Anschlussstutzen (13) geführten Schliesselements (5) verschliessbar ist, wenn das Schliesselement (5) auf dem Ventilsitz (17) aufliegt. Zumindest einer der Einlass- oder Auslassstutzen (11, 12) enthält ein Adapterflanschelement (2, 3), welches vom Ein- oder Auslassstutzen (11, 12) abnehmbar ist.

## Beschreibung

Die vorliegende Erfindung betrifft ein Ventilgehäuse sowie ein zugehöriges Ventil zur Förderung von Flüssigkeiten oder Gasen, insbesondere zur Verwendung in Armaturen. Dem Fachmann sind insbesondere Stopfbüchsenventile, Kolbenschieberventile, Faltenbalgventile, Membranventile oder Koaxialventile bekannt. Zur Förderung von Dämpfen, Kondensaten, Wärmeträgerölen oder Heissweisser werden hauptsächlich Stopfbüchsenventile, Kolbenschieberventile, Faltenbalgventile eingesetzt. Der Einsatz von Stopfbüchsenventilen erfolgt vor allem im Hochdruckbereich im ASME Normenbereich. Im EN Normenbereich werden in einem Nenndruckbereich bis PN 40 hauptsächlich Faltenbalgventile und Kolbenschieberventile eingesetzt, wobei in den letzten 30 Jahren vermehrt Faltenbalgventile Verwendung finden, weil die Dichtheit des Faltenbalgventils nach aussen durch die doppelte Abdichtung durch den Faltenbalg gegenüber dem Kolbenschieberventil verbessert ist. Das Kolbenschieberventil weist hingegen eine verbesserte Dichtheit im Durchgangskanal auf, wobei dieser Vorteil weniger stark ins Gewicht fällt, da auch die Dichtheit der Faltenbalgventile im Durchgang zwischenzeitlich deutliche Verbesserungen erfahren hat.

Ein Kolbenschieberventil ist robust gegen Dampfschläge. Zudem ist ein Kolbenschieberventil einfach zu warten, da die Verschleissteile, insbesondere die Kolbenringe, auch in eingebautem Zustand ausgetauscht werden können. Ein Kolbenschieberventil kann als Regelventil eingesetzt werden, da es für den Einsatz in einem Regelkreis geeignet ist. Zudem weist das Kolbenschieberventil gegenüber einem Faltenbalgventil verbesserte Kv-Werte auf.

Allerdings weist ein Kolbenschieberventil in der Regel einen langen Hub auf, zudem treten bei der Betätigung hohe Drehmomente auf, was zur Folge hat, dass das Kolbenschieberventil schwergängig ist. Im Bereich DN 15 bis DN 50 kann zudem die Dichtheit nach aussen im Vergleich um Faltenbalgventil schlechter sein, da durch den Faltenbalg eine doppelte Abdichtung möglich ist. Zudem ist das Kolbenschieberventil teuer sowohl in der Herstellung bedingt durch den Materialaufwand für den Kolben als auch in der Automatisierung.

Demgegenüber zeichnet sich das Faltenbalgventil durch eine leichtgängige Bedienung sowie durch geringere Automatisierungskosten aus. Allerdings kann der Faltenbalg auch eine Schwachstelle darstellen, da dessen metallische Abdichtung schneller beeinträchtigt werden kann, beispielsweise kann der Ventilsitz durch Partikel beschädigt werden oder der Faltenbalg bei Dampfschlägen brechen. Die Wartung bzw. Revision eines metallisch dichtenden Faltenbalgventils kann sich durch das Einschleifen des Ventilsitzes aufwändiger gestalten.

Unabhängig von der Bauart des entsprechenden Ventils als Faltenbalgventil oder Kolbenschieberventil hat es sich als nachteilig erwiesen, dass ein derartiges Ventil je nach Verwendung für einen bestimmten Nenndruck ein unterschiedliches Ventilgehäuse aufweist, das sich durch die Flansche unterscheidet, die zur Verbindung des Ventils mit einer Rohrleitung dienen. Daher war zur Bevorratung von Ventilen für verschiedene Nenndruckstufen bisher die Lagerhaltung von mehreren verschiedenen Ventilgehäusen erforderlich. Bei einer Nennweite DN 200 beispielsweise wären für die Nenndruckstufen PN 10, PN 16, PN 25 und PN 40 insgesamt 4 verschiedene Ventilgehäuse erforderlich.

Somit kann eine aufwändige Nachbearbeitung des zur Verbindung mit dem entsprechenden Rohrflansch erforderlichen Flansches des Ventilgehäuses erforderlich sein.

### Stand der Technik

Ein Kolbenschieberventil, welches als Regelventil eingesetzt wird, ist beispielsweise in der DE19723993 C1 gezeigt. Der Problematik von Leckagen zwischen dem Ventilsitz und dem Gehäuse bei geschlossenem Ventil wird mittels eines kombinierten Dichtungselements abgeholfen, welches als Ringscheibe aus einem wenig elastischen Material ausgebildet ist, welches im Bereich des inneren Randes ein elastisches Element enthält, welches am Ventilsitz abgestützt ist.

Auch in diesem Dokument ist gezeigt, dass das Ventilgehäuse je einen Flansch aufweist, mittels welchem die Einlassöffnung bzw. die Auslassöffnung mit genau einem Rohrflansch an die an das Ventil anschliessende Rohrleitung koppelbar ist. Somit muss für unterschiedliche Rohrdurchmesser oder unterschiedliche Nenndruckbereiche je ein eigenes Ventilgehäuse hergestellt werden.

### Aufgabe der Erfindung

Aufgabe der Erfindung ist es, ein Ventil bereitzustellen, welches für beliebige Rohranschlüsse, beispielsweise für verschiedene Rohrdurchmesserbereiche oder für unterschiedliche Nenndruckbereiche universell einsetzbar ist.

### Beschreibung der Erfindung

Die Lösung der Aufgabe der Erfindung erfolgt durch ein Ventil gemäss Anspruch 1. Vorteilhafte Ausführungsbeispiele des Ventils sind Gegenstand der Ansprüche 2 bis 14.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Ventil. Die Beschreibung eines bestimmten Ventils ist nur als beispielhaft anzusehen. In der Beschreibung und den Ansprüchen werden die Begriffe "enthalten", "umfassen", "aufweisen" als "enthalten, aber nicht beschränkt auf" interpretiert.

Die Aufgabe der Erfindung wird durch ein Ventil gelöst, welches ein Ventilgehäuse enthält, wobei das Ventilgehäuse einen Einlassstutzen, einen Auslassstutzen und einen Anschlussstutzen für eine Absperrvorrichtung enthält. Die Absperrvorrichtung enthält eine Betätigungsvorrichtung und ein Schliesselement. Eine Fluideintrittsöffnung ist im Einlassstutzen angeordnet, eine Fluidaustrittsöffnung ist im Auslassstutzen angeordnet. Im Inneren des Ventilgehäuses erstreckt sich ein Fluidkanal von der Fluideintrittsöffnung zur Fluidaustrittsöffnung, wobei im Fluidkanal ein Ventilsitz angeordnet ist, sodass der Fluidkanal mittels des durch den Anschlussstutzen geführten Schliesselements verschliessbar ist, wenn das Schliesselement auf dem Ventilsitz aufliegt. Zumindest einer der Einlass- oder Auslassstutzen enthält ein Adapterflanschelement, welches vom Ein- oder Auslassstutzen abnehmbar ist.

Gemäss eines Ausführungsbeispiels enthält das Adapterflanschelement eine Mehrzahl von Bohrungen, die zur Verbindung mit einem Flansch einer an das Ventil anschliessenden Rohrleitung ausgebildet sind.

Gemäss eines Ausführungsbeispiels enthält das Adapterflanschelement ein erstes Teilringelement und ein zweites Teilringelement, welche den Einlass- bzw. Auslassstutzen umgeben. Durch das das erste und zweite Teilringelement wird somit ein Ringflansch ausgebildet, wenn sie auf dem Einlassstutzen bzw. dem Auslassstutzen angebracht sind. Die ersten und zweiten Teilringelemente sind vom Einlass- bzw. Auslassstutzen abnehmbar. Insbesondere weist jedes der Teilringelemente ein erstes Ende und ein zweites Ende auf, wobei je ein Absatz in der Nähe des ersten Endes und des zweiten Endes angeordnet ist. Gemäss dieses Ausführungsbeispiels schliesst ein Endbereich an das erste bzw. zweite Ende an, wobei der Endbereich auf, der dem ersten bzw. zweiten Ende gegenüberliegenden Seite von einem Absatz begrenzt wird.

Gemäss eines Ausführungsbeispiels enthält der Endbereich eine Bohrung. Der Endbereich kann als eine Auflagefläche ausgebildet sein, sodass einander gegenüberliegende Endbereiche der beiden Teilringelemente aufeinander aufliegen können.

Somit können die Teilringelemente derart miteinander koppelbar sein, dass die gegenüberliegenden Endbereiche der Teilringelemente aufeinander aufliegen, sodass die zugehörigen Bohrungen fluchtend zueinander angeordnet sind, sodass ein Verbindungselement durch die Bohrungen hindurchführbar ist.

Gemäss eines Ausführungsbeispiels ist das Verbindungselement als eine Schraube mit zugehöriger Mutter ausgebildet. Die Schraube wird durch die in den Endbereichen angeordneten Bohrungen hindurchgeführt und durch eine Mutter gesichert.

Gemäss eines Ausführungsbeispiels entspricht der Innendurchmesser des Adapterflanschelements im Einbauzustand im Wesentlichen dem Aussendurchmesser des Einlassstutzens bzw. des Auslassstutzens. Insbesondere kann der Aussendurchmesser des Adapterflanschelements entsprechend dem zugehörigen Rohrflansch auswählbar sein. Die im Adapterflanschelement befindliche Bohrung oder die im Adapterflanschelement befindlichen Bohrungen können entsprechend der Anzahl und Anordnung der Bohrungen des gewünschten Rohrflansches gewählt werden. Insbesondere können die Mittelpunkte sämtlicher Bohrungen auf einem Kreis liegen, dessen Durchmesser dem zugehörigen Kreis der Bohrungen entspricht, die auf dem Rohrflansch angeordnet sind. Somit können für jeden beliebigen Rohrflansch zugehörige Adapterflanschelemente bereitgestellt werden, es ist somit nicht mehr erforderlich, je ein Ventilgehäuse für jede beliebige Kopplung vorrätig zu halten, grundsätzlich wird für einen bestimmten Durchmesserbereich nur ein einziges Ventilgehäuse und ein entsprechendes Sortiment an Adapterflanschelementen benötigt.

Gemäss eines Ausführungsbeispiels können der Einlassstutzen bzw. der Auslassstutzen mit Adapterflanschelementen mit unterschiedlichen Aussendurchmessern oder unterschiedlichen Dicken koppelbar sein.

Gemäss eines Ausführungsbeispiels weist der Einlassstutzen und/oder der Auslassstutzen einen Anschlag auf. An diesem Anschlag liegt das entsprechende Adapterflanschelement an.

Gemäss eines Ausführungsbeispiels ist die Dicke des Adapterflanschelements zur Koppelung mit einem zugehörigen Rohrflansch anpassbar.

Gemäss eines Ausführungsbeispiels weist das Adapterflanschelement Bohrungen zur Koppelung mit einem zugehörigen Rohrflansch auf. Insbesondere kann der Durchmesser der Bohrung an den zugehörigen Rohrflansch angepasst sein.

Ein Vorteil des erfindungsgemässen Ventils ist darin zu sehen, dass ein einziges Ventil für Flansche für unterschiedliche Druckstufen verwendet werden kann. Das Ventil kann auch für verschiedene Rohrabmessungen verwendet werden, weil es durch Auswahl des geeigneten Adapterflanschelements an Rohrflansche mit unterschiedlichen Dimensionen angepasst werden kann. Insbesondere kann das Ventil für Rohrflansche mit unterschiedlichem Aussendurchmesser, unterschiedlicher Dicke, unterschiedlicher Anzahl an Bohrungen für Verbindungselemente, unterschiedlicher Anordnung der Bohrungen oder unterschiedlicher Grösse der Bohrungen zum Einsatz kommen. Das Ventilgehäuse kann einen Einlassstutzen oder einen Auslassstutzen enthalten, welche als Anschweissenden oder als Einschweissenden ausgebildet sein können. Alternativ können der Einlassstutzen oder der Auslassstutzen auch ein Innengewinde enthalten, daher ist das erfindungsgemässe Ventilgehäuse vielseitig für beliebige Verbindungen einsetzbar.

### Kurzbeschreibung der Zeichnungen

Nachfolgend wird das erfindungsgemässe Ventil anhand einiger Ausführungsbeispiele dargestellt. Es zeigen
Fig. 1 eine Ansicht eines Ventils gemäss eines Ausführungsbeispiels,
Fig. 2 einen Schnitt durch das Ventil gemäss Fig. 1,
Fig. 3 eine Ansicht eines Ventilgehäuses für ein Ventil gemäss Fig. 1 von vorne,
Fig. 4 eine Ansicht des Ventilgehäuses gemäss Fig. 3 sowie der zugehörigen Adapterflanschelemente von vorne,
Fig. 5 eine perspektivische Ansicht eines Ventilgehäuses für ein Ventil gemäss Fig. 1,
Fig. 6 eine perspektivische Ansicht eines Ventilgehäuses für ein Ventil gemäss Fig. 1 sowie der zugehörigen Adapterflanschelemente,
Fig. 7 eine perspektivische Ansicht eines Ventils gemäss Fig. 1 sowie der zugehörigen Adapterflanschelemente,
Fig. 8 eine Explosionszeichnung eines der Adapterflanschelemente,
Fig. 9 ein zweites Ausführungsbeispiel der Adapterflanschelemente,
Fig. 10a ein Schnitt durch eine Anordnung eines Adapterflanschelements nach einem dritten Ausführungsbeispiel,
Fig. 10b eine Ansicht auf ein Adapterflanschelement gemäss Fig. 10a,
Fig. 11 einen Schnitt durch ein Ventil gemäss eines zweiten Ausführungsbeispiels.

### Detaillierte Beschreibung der Zeichnungen

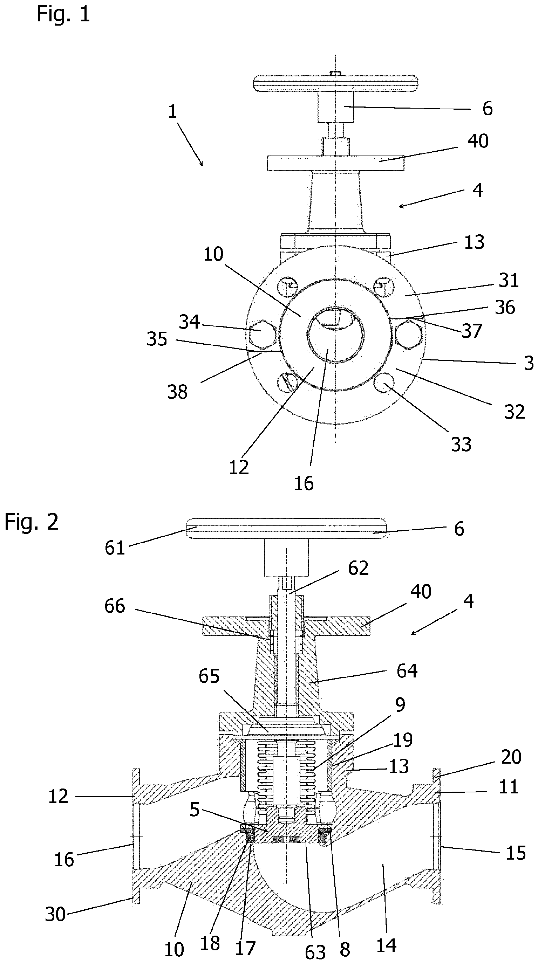

Fig. 1 zeigt eine Ansicht eines erfindungsgemässen Ventils 1. Das Ventil 1 enthält ein Ventilgehäuse 10. Vom Ventilgehäuse 10 ist ein Auslassstutzen 12 sichtbar, der ein Adapterflanschelement 3 trägt. Der Auslassstutzen 12 enthält eine Fluidaustrittsöffnung 16. Das Adapterflanschelement 3 enthält eine Mehrzahl von Bohrungen 33, die zur Verbindung mit einem Flansch einer an das Ventil 1 anschliessenden Rohrleitung ausgebildet sind. Das Adapterflanschelement 3 umfasst mindestens ein erstes Teilringelement 31 und ein zweites Teilringelement 32.

Jedes der Teilringelemente 31, 32 weist ein erstes Ende 35, 37 und ein zweites Ende 36, 38 auf, wobei je ein Absatz 55, 57 am ersten Ende und je ein Absatz 56, 58 am zweiten Ende angeordnet ist. Gemäss des vorliegenden Ausführungsbeispiels befindet sich in jedem der Absätze eine Absatzbohrung, welche mit der jeweiligen Absatzbohrung des Absatzes des anderen Teilringelements fluchtet, wenn sie derart angeordnet sind, dass sie insgesamt einen Kreisring ergeben, wie in Fig. 1 für das Adapterflanschelement 3 gezeigt ist. Die Absätze 55, 56, 57, 58 sind in Fig. 1 nicht sichtbar. Auch die Absatzbohrungen sind nicht sichtbar, da sie gemäss Fig. 1 durch ein Verbindungselement 34 verdeckt sind, welches die beiden übereinander liegenden Absätze miteinander verbindet. Das Verbindungselement 34 kann beispielsweise als eine Schraube mit zugehöriger Mutter ausgebildet sein.

Der Einlassstutzen (siehe Fig. 2) ist in der vorliegenden Darstellung durch den Auslassstutzen 12 sowie das Adapterflanschelement 3 verdeckt. Von dem zwischen dem Einlassstutzen 11 und dem Auslassstutzen 12 liegenden Anschlussstutzen 13 ist nur ein kleiner Teil sichtbar. Der Anschlussstutzen 13 enthält eine Absperrvorrichtung 4. Die Absperrvorrichtung 4 enthält ein Schliesselement 5 sowie eine Betätigungsvorrichtung 6 für das Schliesselement 5. Das Schliesselement 5 ist in Fig. 2 sichtbar.

Fig. 2 zeigt einen Schnitt durch das Ventil 1 gemäss Fig. 1 im geschlossenen Zustand. Das Ventil 1 enthält ein Ventilgehäuse 10. Das Ventilgehäuse 10 enthält einen Einlassstutzen 11, einen Auslassstutzen 12 sowie einen Anschlussstutzen 13. Im Einlassstutzen ist eine Fluideintrittsöffnung 15 angeordnet, im Auslassstutzen ist eine Fluidaustrittsöffnung 16 angeordnet. Im Inneren des Ventilgehäuses 10 erstreckt sich ein Fluidkanal 14 von der Fluideintrittsöffnung 15 zur Fluidaustrittsöffnung 16. Im Fluidkanal 14 ist ein Ventilsitz 17 angeordnet, wobei der Fluidkanal 14 mittels eines durch den Anschlussstutzen 13 geführten Schliesselements 5 verschliessbar ist, wenn das Schliesselement 4 auf dem Ventilsitz 17 aufliegt. Zumindest einer der Einlass- oder Auslassstutzen 11, 12 enthält ein Adapterflanschelement 2, 3, welches vom Ein- oder Auslassstutzen 11, 12 abnehmbar ist.

Das Adapterflanschelement 2 ist von einem Anschlag 20 des Einlassstutzens 11 gehalten. Das Adapterflanschelement 3 ist von einem Anschlag 30 des Auslassstutzens 12 gehalten. Die Adapterflanschelemente 2, 3 bleiben im zusammengebauten Zustand mit dem Ventilgehäuse 10 verbunden. Insbesondere sind die Adapterflanschelemente 2, 3 auf der Seite der Fluideintrittsöffnung bzw. Fluidaustrittsöffnung angeordnet, welche einem an die Fluideintrittsöffnung bzw. Fluidaustrittsöffnung angeschlossenen Rohr gegenüberliegt. Somit sind die Adapterflanschelemente 2, 3 durch den Anschlag 20, 30 auf dem Ventilgehäuse 10 gehalten und können somit in zusammengebautem Zustand nicht verloren gehen. Gemäss des vorliegenden Ausführungsbeispiels enthält sowohl das Adapterflanschelement 2 ein erstes Teilringelement 21 und ein zweites Teilringelement 22. Auch das Adapterflanschelement 3 enthält ein erstes Teilringelement 31 und ein zweites Teilringelement 32, welche auf der Innenseite des zugehörigen Einlass- bzw. Auslassstutzens 11, 12 angeordnet sind. Die ersten und zweiten Teilringelemente 21, 22, 31, 32 sind für die Montage und Demontage des entsprechenden Adapterflanschelements 2, 3 am Ventilgehäuse 10 erforderlich.

Das Adapterflanschelement 2 und das Adapterflanschelement 3 enthalten eine Mehrzahl von Bohrungen 23, 33 die zur Verbindung mit einem Flansch eines an das Ventil anschliessenden Rohrs ausgebildet sind. Die Teilringelemente des Adapterflanschelements 2 sind, wie in Zusammenhang mit Fig. 1 für das Adapterflanschelement 3 beschrieben, derart miteinander koppelbar, dass die an den ersten und zweiten Endbereiche der Teilringelemente anschliessenden Absätze aufeinander aufliegen, sodass die zugehörigen Bohrungen fluchtend zueinander angeordnet sind, sodass ein Verbindungselement 34 durch die Bohrungen hindurchführbar ist.

Gemäss des vorliegenden Ausführungsbeispiels entspricht der Innenradius der Teilringelemente 21, 22 im Wesentlichen dem Aussendurchmesser des Einlassstutzens 11. Der Aussenradius der Teilringelemente 21, 22 und somit der Aussendurchmesser des Adapterflanschelements 2 ist entsprechend dem zugehörigen Rohrflansch auswählbar. Der Innenradius der Teilringelemente 31, 32 entspricht im Wesentlichen dem Aussendurchmesser des Auslassstutzens 12. Der Aussenradius der Teilringelemente 31, 32 und somit der Aussendurchmesser des Adapterflanschelements 3 ist entsprechend dem zugehörigen Rohrflansch auswählbar.

Insbesondere können der Einlassstutzen 11 bzw. der Auslassstutzen 12 oder der Anschlussstutzen 13 mit Adapterflanschelementen 2, 3 mit unterschiedlichen Aussendurchmessern oder unterschiedlichen Dicken koppelbar sein, was zeichnerisch nicht dargestellt ist. Das Ventil kann somit für verschiedene Rohrabmessungen verwendet werden, weil es durch Auswahl des geeigneten Adapterflanschelements 2, 3 an Rohrflansche mit unterschiedlichen Dimensionen angepasst werden kann. Insbesondere kann das Ventil für Rohrflansche mit unterschiedlichem Aussendurchmesser, unterschiedlicher Dicke, unterschiedlicher Anzahl an Bohrungen für Verbindungselemente, unterschiedlicher Anordnung der Bohrungen oder unterschiedlicher Grösse der Bohrungen zum Einsatz kommen. Mit der Dicke ist insbesondere die Dicke des Flanschblatts des Adapterflanschelements gemeint.

In Fig. 2 ist auch ein Schnitt durch den Anschlussstutzen 13 gezeigt. Der Anschlussstutzen 13 enthält eine Absperrvorrichtung 4. Die Absperrvorrichtung 4 enthält ein Schliesselement 5 sowie eine Betätigungsvorrichtung 6 für das Schliesselement 5. Gemäss des vorliegenden Ausführungsbeispiels umfasst die Betätigungsvorrichtung 6 eine Antriebseinheit 61, welches mit einem Stangenelement 62, beispielsweise einer Verstellspindel, verbunden ist. Die Antriebseinheit 61 ist somit an einem Ende des Stangenelements 62 angebracht, an deren gegenüberliegenden Ende befindet sich ein Kolbenelement 63, welches gemäss dieses Ausführungsbeispiels das Schliesselement 5 ausbildet. Das Schliesselement 5 ist in einer Bohrung 19 des Anschlussstutzens 13 verschiebbar gelagert. In dieser Bohrung 19 ist gemäss dieses Ausführungsbeispiels ein Hülsenelement 7 angeordnet. Das Hülsenelement 7 ermöglicht die präzise Führung des Schliesselements 5, insbesondere in der Schliessstellung desselben. Das Hülsenelement 7 ist an der Innenwand des Anschlussstutzens 13 angeordnet.

Das Hülsenelement 7 enthält Öffnungen, sodass die Fluidströmung durch den Fluidkanal 14 im geöffneten Zustand des Schliesselements 5 nicht oder nicht wesentlich behindert wird. Das Hülsenelement 7 dient auch zum Schutz des ersten Umgebungsdichtungselements 65 vor Stössen, die durch das strömende Fluid verursacht werden können und hält das erste Fluiddichtungselement 8 in seiner Position auf dem Ventilsitz 17. Die Bohrung 19 wird von der Innenwand des Anschlussstutzens 13 ausgebildet. Das Hülsenelement 7 enthält Öffnungen, sodass das durch den Fluidkanal 14 strömende Fluid im geöffneten Zustand des Schliesselements 5 nicht auf das erste Umgebungsdichtungselement 65 auftrifft, sondern unterhalb der Auflagefläche des Schliesselements 5 hindurchströmt.

Im geöffneten Zustand des Ventils 1 liegt das Schliesselement 5 nicht auf dem im Ventilgehäuse 10 befindlichen Ventilsitz 17 oder einem darauf befindlichen ersten Fluiddichtungselement 8 auf. Der Abstand des Schliesselements 5 vom Ventilsitz 17 bzw. vom ersten Fluiddichtungselement 8 kann durch die Betätigungsvorrichtung 6 eingestellt werden. Daher ist das in Fig. 2 dargestellte Ventil als Regelungsventil ausgebildet. Die Stangenelement 62 enthält ein Aussengewinde, welches in ein Innengewinde eingreift, welches in einem Mantelelement 64 angeordnet ist. Das Mantelelement 64 ist gemäss des vorliegenden Ausführungsbeispiels auf dem Anschlussstutzen 13 aufgesetzt und mit diesem fluiddicht verbunden. Zusätzlich zum ersten Fluiddichtungselement 8 kann ein zweites Fluiddichtungselement 18 vorgesehen sein.

Gemäss des vorliegenden Ausführungsbeispiels ist auf dem Stangenelement 62 zwischen dem Mantelelement 64 und dem Auslassstutzen 13 ein erstes Umgebungsdichtungselement 65 angeordnet. Das erste Umgebungsdichtungselement 65 erstreckt sich vom Schliesselement 5 zum Anschlussstutzen 13, um einen Kontakt der Betätigungsvorrichtung 6 mit dem im Betriebszustand durch den Fluidkanal 14 strömenden Fluid zu verhindern.

Insbesondere kann die Betätigungsvorrichtung 6 ein Stangenelement 62 umfassen, welches einen ersten Abschnitt und einen zweiten Abschnitt aufweist, wobei der erste Abschnitt des Stangenelements 62 mit einer Antriebseinheit 61 verbindbar ist. Der zweite Abschnitt des Stangenelements 62 ist mit dem Schliesselement 5 verbindbar. Gemäss des vorliegenden Ausführungsbeispiels ist die Antriebseinheit 61 als Handrad ausgebildet, welches nur exemplarisch stellvertretend für eine Vielzahl möglicher Antriebseinheiten dargestellt ist.

Der Anschlussstutzen 13 enthält eine Aufnahmeöffnung, wobei sich der zweite Abschnitt des Stangenelements 62 von der Aufnahmeöffnung des Anschlussstutzens 13 zum Schliesselement 5 erstreckt. Der zweite Abschnitt des Stangenelements 62 ist innerhalb des ersten Umgebungsdichtungselements 65 angeordnet.

Gemäss des vorliegenden Ausführungsbeispiels ist der erste Abschnitt des Stangenelements 62 in einem Mantelelement 64 aufgenommen, wobei das Stangenelement 62 relativ zum Mantelelement 64 drehbar und verschiebbar ist. Das Mantelelement 64 ist insbesondere koaxial zum Anschlussstutzen 13 angeordnet. Das Mantelelement 64 ist mit dem Anschlussstutzen 13 verbunden. Beispielsweise kann das Mantelelement 64 mittels einer Schraubverbindung, insbesondere mittels einer Flanschverbindung, lösbar mit dem Anschlussstutzen 13 verbunden sein. Gemäss dieses Ausführungsbeispiels ist das Mantelelement 64 vom Anschlussstutzen 13 beispielsweise für Reinigungszwecke oder für Wartungsarbeiten abnehmbar, beispielsweise, um eines der ersten oder zweiten Fluiddichtungselemente 4,8 oder das erste Umgebungsdichtungselement 65 auszutauschen. Das Mantelelement 64 kann eine weitere Flanschverbindung auf der dem Anschlussstutzen 64 gegenüberliegenden Seite enthalten. Diese Flanschverbindung kann als ein Anschlag 40 ausgebildet sein, auf welchem ein nicht dargestelltes Adapterflanschelement angebracht werden kann, welches analog zu einem der in den vorhergehenden Ausführungsbeispielen beschriebenen Adapterflanschelemente 2, 3 ausgebildet sein kann.

Das erste Umgebungsdichtungselement 65 ist gemäss dieses Ausführungsbeispiels einerseits mittels des Mantelelements 62 am Anschlussstutzen 13 befestigt. Das erste Umgebungsdichtungselement 65 ist auch am Schliesselement 5 befestigt. Die Länge des ersten Umgebungsdichtungselements 65 ist in Abhängigkeit von der Position des Schliesselements 5 veränderbar, das heisst, das erste Umgebungsdichtungselement 65 passt sich in seiner Länge der entsprechenden Position des Schliesselements 5 an.

Zusätzlich kann das Stangenelement 62 mittels eines zweiten Umgehungsdichtungselements 66, beispielsweise mittels eines ringförmigen Dichtungselements, wie insbesondere eines Stopfbuchsenelements, eines Wellendichtrings, eines O-rings, die zwischen dem Gewindeabschnitt und der Antriebseinheit 61 angeordnet sind, nach aussen abgedichtet werden, um beispielsweise den Austritt von Schmiermitteln zu verhindern oder im Fall einer Leckage des ersten Umgebungsdichtungselements 65 das zweite Umgebungsdichtungselement 66 auszubilden.

Gemäss eines nicht dargestellten Ausführungsbeispiels kann das Schliesselement 5 mittels einer Betätigungsvorrichtung 6 betätigt werden, welche hydraulisch oder pneumatisch betätigbar ist. Alternativ kann eine Betätigungsvorrichtung 6 zum Einsatz kommen, die einen elektrischen Antrieb aufweist.

Die Betätigungsvorrichtung 6 kann, wie im vorliegenden Ausführungsbeispiel gezeigt, manuell verstellbar sein. Alternativ kann eine Regelungseinheit vorgesehen sein, mittels welcher das Schliesselement 5 ohne manuellen Eingriff verstellbar ist, indem eine hydraulische, pneumatische oder elektrische Antriebsvorrichtung für die Betätigungsvorrichtung 6 betätigt wird.

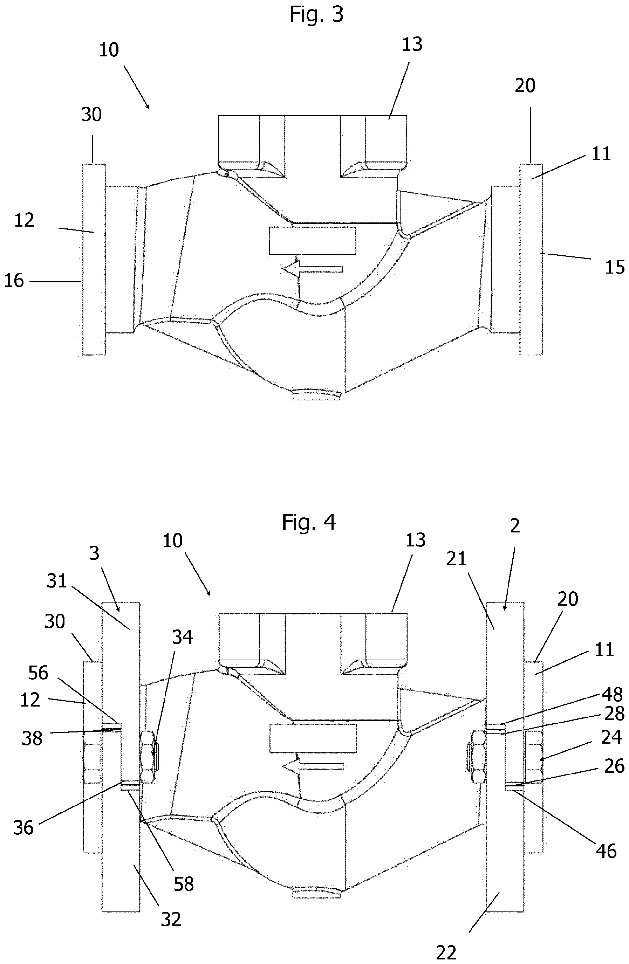

Fig. 3 zeigt eine Ansicht eines Ventilgehäuses 10 für ein Ventil 1 gemäss Fig. 1 von vorne. Das Ventilgehäuse 10 enthält einen Einlassstutzen 11, einen Auslassstutzen 12 sowie einen Anschlussstutzen 13. Der Einlassstutzen 11 enthält eine nicht dargestellte und nicht sichtbare Fluideintrittsöffnung 15. Der Auslassstutzen 12 enthält eine nicht dargestellte und nicht sichtbare Fluidaustrittsöffnung 16. Der Einlassstutzen 11 weist einen Anschlag 20 auf, der als ein Flanschelement ausgebildet ist. Der Auslassstutzen 12 weist einen Anschlag 30 auf, der als ein Flanschelement ausgebildet ist.

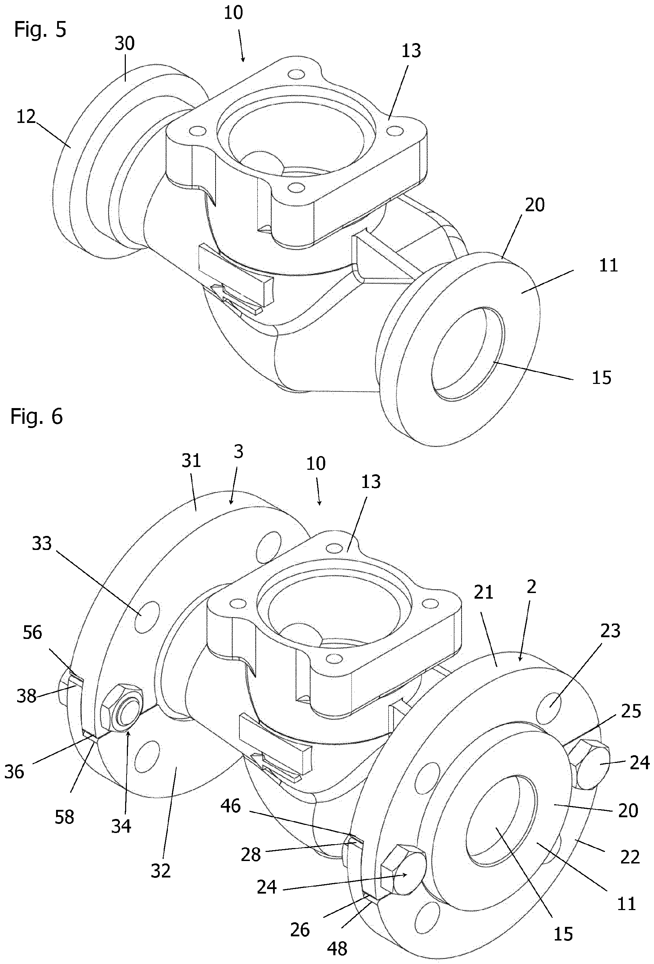

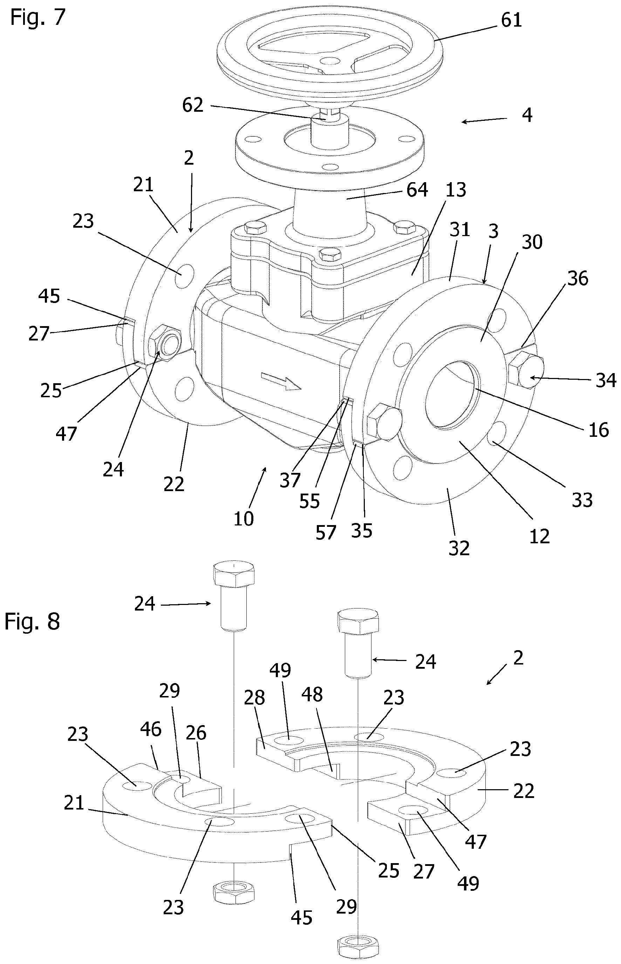

Fig. 4 zeigt eine Ansicht des Ventilgehäuses 10 gemäss Fig. 3 sowie der zugehörigen Adapterflanschelemente 2, 3 von vorne. Das Ventilgehäuse 10 enthält einen Einlassstutzen 11, einen Auslassstutzen 12 sowie einen Anschlussstutzen 13. Der Einlassstutzen 11 enthält eine nicht dargestellte und in dieser Ansicht nicht sichtbare Fluideintrittsöffnung 15 (siehe Fig. 6). Der Auslassstutzen 12 enthält eine nicht dargestellte und dieser Ansicht nicht sichtbare Fluidaustrittsöffnung 16 (siehe Fig. 7). Der Einlassstutzen 11 weist einen Anschlag 20 auf, der als ein Flanschelement ausgebildet ist. Der Auslassstutzen 12 weist einen Anschlag 30 auf, der als ein Flanschelement ausgebildet ist.

Das Adapterflanschelement 2 liegt auf dem Anschlag 20 des Einlassstutzens 11 auf. Das Adapterflanschelement 2 umfasst mindestens ein erstes Teilringelement 21 und ein zweites Teilringelement 22. Das erste Teilringelement 21 weist ein erstes Ende 25 und ein zweites Ende 26 auf, wobei das erste Ende in dieser Darstellung nicht sichtbar ist, siehe hierzu Fig. 8. Das zweite Teilringelement 22 weist ein erstes Ende 27 und ein zweites Ende 28 auf, wobei das erste Ende in dieser Darstellung nicht sichtbar ist, siehe hierzu Fig. 8. Je ein erster Absatz 45 ist am ersten Ende und je ein zweiter Absatz 46 ist am zweiten Ende des ersten Teilringelements 21 angeordnet, wobei der erste Absatz 45 in Fig. 4 nicht sichtbar ist, siehe hierzu Fig. 8. Je ein erster Absatz 47 ist in der Nähe des ersten Endes 27 und je ein zweiter Absatz 48 ist in der Nähe des zweiten Endes 28 des zweiten Teilringelements 22 angeordnet, wobei der erste Absatz 45 in Fig. 4 nicht sichtbar ist, siehe hierzu Fig. 8.

Gemäss des vorliegenden Ausführungsbeispiels befindet sich in jedem der Endbereiche zwischen den Enden und den zugehörigen Absätzen eine Bohrung, welche mit der jeweiligen Bohrung des korrespondierenden Endbereichs des anderen Teilringelements fluchtet, wenn das erste und zweite Teilringelement 21, 22 derart angeordnet sind, dass sie insgesamt einen Kreisring ergeben, wie in Fig. 1 für das Adapterflanschelement 3 oder in Fig. 6 gezeigt ist. Die Bohrungen in den Endbereichen sind in Fig. 4 nicht sichtbar. Ein Verbindungselement 24 ist zur Verbindung des ersten Endbereichs des ersten Teilringelements 21 mit dem ersten Endbereich des zweiten Teilringelements 22 vorgesehen, welches die beiden übereinander liegenden Endbereiche durch die darin befindlichen Bohrungen miteinander verbindet. Ein weiteres Verbindungselement 24 ist zur Verbindung des zweiten Endbereichs des ersten Teilringelements 21 mit dem zweiten Endbereich des zweiten Teilringelements 22 vorgesehen, welches die beiden übereinander liegenden Endbereiche durch die darin befindlichen Bohrungen miteinander verbindet. Das Verbindungselement 24 kann beispielsweise als eine Schraube mit zugehöriger Mutter ausgebildet sein. Gemäss des vorliegenden Ausführungsbeispiels sind zwei Verbindungselemente 24 vorgesehen, es könnten aber auch mehr als zwei Verbindungselemente und auch mehr als zwei Teilringelemente verwendet werden.

Das Adapterflanschelement 3 liegt auf dem Anschlag 30 des Einlassstutzens 11 auf. Das Adapterflanschelement 2 umfasst mindestens ein erstes Teilringelement 31 und ein zweites Teilringelement 32. Das erste Teilringelement 31 weist ein erstes Ende 35 und ein zweites Ende 36 auf, wobei das erste Ende 35 in dieser Darstellung nicht sichtbar ist, siehe hierzu Fig. 1. Das zweite Teilringelement 32 weist ein erstes Ende 37 und ein zweites Ende 38 auf, wobei das erste Ende 37 in dieser Darstellung nicht sichtbar ist, siehe hierzu Fig. 1. Je ein erster Absatz 55 ist am ersten Ende und je ein zweiter Absatz 56 ist am zweiten Ende des ersten Teilringelements 31 angeordnet, wobei der erste Absatz 55 in Fig. 4 nicht sichtbar ist, siehe hierzu Fig. 7. Je ein erster Absatz 57 ist in der Nähe des ersten Endes 37 und je ein zweiter Absatz 58 ist in der Nähe des zweiten Endes 38 des zweiten Teilringelements 32 angeordnet, wobei der erste Absatz 57 in Fig. 4 nicht sichtbar ist, siehe hierzu Fig. 7.

Gemäss des vorliegenden Ausführungsbeispiels befindet sich in jedem der Endbereiche zwischen den Enden und den zugehörigen Absätzen eine Bohrung, welche mit der jeweiligen Bohrung des korrespondierenden Endbereichs des anderen Teilringelements fluchtet, wenn das erste und zweite Teilringelement 31, 32 derart angeordnet sind, dass sie insgesamt einen Kreisring ergeben, wie in Fig. 1 für das Adapterflanschelement 3 gezeigt ist. Die Bohrungen in den Endbereichen sind in Fig. 4 nicht sichtbar. Ein Verbindungselement 34 ist zur Verbindung des ersten Endbereichs des Teilringelements 31 mit dem ersten Endbereich des Teilringelements 32 vorgesehen, welches die beiden übereinander liegenden Endbereiche durch die darin befindlichen Bohrungen miteinander verbindet. Ein weiteres Verbindungselement 34 ist zur Verbindung des zweiten Endbereichs des Teilringelements 31 mit dem zweiten Endbereich des Teilringelements 32 vorgesehen, welches die beiden übereinander liegenden Endbereiche durch die darin befindlichen Bohrungen miteinander verbindet. Das Verbindungselement 34 kann beispielsweise als eine Schraube mit zugehöriger Mutter ausgebildet sein. Gemäss des vorliegenden Ausführungsbeispiels sind zwei Verbindungselemente 34 vorgesehen, es könnten aber auch mehr als zwei Verbindungselemente und auch mehr als zwei Teilringelemente verwendet werden.

Fig. 5 zeigt eine perspektivische Ansicht eines Ventilgehäuses 10 für ein Ventil 1 gemäss Fig. 1. Gleiche Bauelemente tragen die gleichen Bezugszeichen wie in den vorhergehenden Abbildungen. Auf die Beschreibung zu Fig. 1 bis Fig. 4 kann an dieser Stelle verwiesen werden. In Fig. 5 ist zudem die Fluideintrittsöffnung 15 sichtbar.

Fig. 6 zeigt eine perspektivische Ansicht eines Ventilgehäuses 10 für ein Ventil 1 gemäss Fig. 1 sowie der zugehörigen Adapterflanschelemente 2, 3. Gleiche Bauelemente tragen die gleichen Bezugszeichen wie in den vorhergehenden Abbildungen. Auf die Beschreibung zu Fig. 1 bis Fig. 5 kann an dieser Stelle verwiesen werden. In Fig. 5 ist zudem die Fluideintrittsöffnung 15 sichtbar. Zudem sind die Adapterflanschelemente 2, 3 in zusammengebautem Zustand gezeigt.

Fig. 7 zeigt eine perspektivische Ansicht eines Ventils gemäss Fig. 1, des Ventilgehäuses 10 sowie der zugehörigen Adapterflanschelemente 2, 3, wobei die Ansicht gemäss Fig. 7 um 180 Grad in Bezug auf die Ansichten gemäss Fig. 5 oder Fig. 6 gedreht ist, sodass das zweite Adapterflanschelement 3 besser sichtbar ist. In der vorliegenden Darstellung ist auch die in Fig. 1 und Fig. 2 dargestellte Absperrvorrichtung 4 sichtbar. Diese Absperrvorrichtung 4 ist nur als ein exemplarisches Beispiel für eine Vielzahl anderer Absperrvorrichtungen 4 anderer Bauart anzusehen, die über den Anschlussstutzen 13 mit dem Ventilgehäuse 10 gekoppelt werden können. Auf die Beschreibung der Absperrvorrichtung 4 in Fig. 2 kann an dieser Stelle verwiesen werden.

Fig. 8 zeigt eine Explosionszeichnung eines der Adapterflanschelemente, exemplarisch ist an dieser Stelle das Adapterflanschelement 2 gewählt worden, das Adapterflanschelement 3 ist gleich aufgebaut wie das gezeigte Adapterflanschelement 2. Gemäss des vorliegenden Ausführungsbeispiels enthält das Adapterflanschelement 2 ein erstes Teilringelement 21 und ein zweites Teilringelement 22. Die ersten und zweiten Teilringelemente 21, 22 sind für die Montage und Demontage des Adapterflanschelements 2 am Ventilgehäuse 10 erforderlich, siehe beispielsweise Fig. 7.

In Fig. 8 sind das erste Teilringelement 21 sowie das zweite Teilringelement 22 sowie die Verbindungselemente 24 zur Verbindung des ersten Teilringelements 21 mit dem zweiten Teilringelement 22 gezeigt. Das erste Teilringelement 21 weist ein erstes Ende 25 und ein zweites Ende 26 auf. Das zweite Teilringelement 22 weist ein erstes Ende 27 und ein zweites Ende 28 auf. Je ein erster Absatz 45 ist am ersten Ende und je ein zweiter Absatz 46 ist am zweiten Ende des ersten Teilringelements 21 angeordnet. Je ein erster Absatz 47 ist in der Nähe des ersten Endes 27 und je ein zweiter Absatz 48 ist in der Nähe des zweiten Endes 28 des zweiten Teilringelements 22 angeordnet.

Gemäss des vorliegenden Ausführungsbeispiels befindet sich in jedem der Endbereiche, die sich zwischen den Enden und den zugehörigen Absätzen erstrecken, eine Bohrung, welche mit der jeweiligen Bohrung des korrespondierenden Endbereichs des anderen Teilringelements fluchtet, wenn das erste und zweite Teilringelement 21, 22 derart angeordnet sind, dass sie insgesamt einen Kreisring ergeben, wie in Fig. 1 für das Adapterflanschelement 3 oder in Fig. 6 gezeigt ist.

Der erste Endbereich des ersten Teilringelements 21 erstreckt sich von dessen ersten Ende 25 bis zum ersten Absatz 45. Der zweite Endbereich des ersten Teilringelements 21 erstreckt sich von dessen zweiten Ende 26 bis zum zweiten Absatz 46. In dem ersten Endbereich und dem zweiten Endbereich ist je eine Bohrung 29 angeordnet. Der erste Endbereich des zweiten Teilringelements 22 erstreckt sich von dessen ersten Ende 27 bis zum ersten Absatz 47. Der zweite Endbereich des zweiten Teilringelements 22 erstreckt sich von dessen zweiten Ende 28 bis zum zweiten Absatz 48. In dem ersten Endbereich und dem zweiten Endbereich ist je eine Bohrung 49 angeordnet.

Ein Verbindungselement 24 ist zur Verbindung des ersten Endbereichs des ersten Teilringelements 21 mit dem ersten Endbereich des zweiten Teilringelements 22 vorgesehen, welches die beiden übereinander liegenden Endbereiche durch die darin befindlichen Bohrungen 29 miteinander verbindet. Ein weiteres Verbindungselement 24 ist zur Verbindung des zweiten Endbereichs des ersten Teilringelements 21 mit dem zweiten Endbereich des zweiten Teilringelements 22 vorgesehen, welches die beiden übereinander liegenden Endbereiche durch die darin befindlichen Bohrungen 29, 49 miteinander verbindet. Das Verbindungselement 24 kann beispielsweise als eine Schraube mit zugehöriger Mutter ausgebildet sein. Gemäss des vorliegenden Ausführungsbeispiels sind zwei Verbindungselemente 24 vorgesehen, es könnten aber gemäss eines nicht dargestellten Ausführungsbeispiels auch mehr als zwei Verbindungselemente und auch mehr als zwei Teilringelemente verwendet werden.

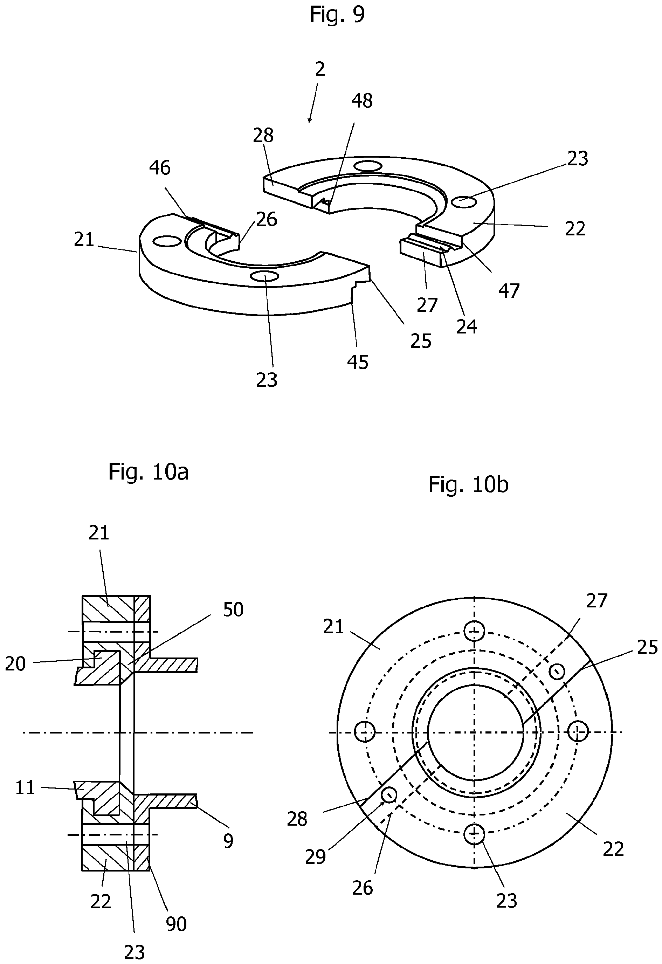

Fig. 9 zeigt weiteres Ausführungsbeispiel für ein Adapterflanschelement, wobei für gleiche oder gleichwirkende Bauelemente dieselben Bezugszeichen wie für das in Fig. 8 gezeigte Adapterflanschelement 2 gewählt werden. Das entsprechende Adapterflanschelement 3 kann gleich wie das gezeigte Adapterflanschelement 2 aufgebaut sein. In Fig. 9 sind ein erstes Teilringelement 21 sowie ein zweites Teilringelement 22 sowie Verbindungselemente 24 zur Verbindung des ersten Teilringelements 21 mit dem zweiten Teilringelement 22 gezeigt. Allerdings bilden die Verbindungselemente 24 gemäss dieses Ausführungsbeispiels eine Rastverbindung aus. Insbesondere kann das Verbindungselemente 24 als eine im Endbereich des Teilringelements angeordnete Rippe oder ein Vorsprung ausgebildet sein, welches in eine im Endbereich des gegenüberliegenden Teilringelements ausgebildete Ausnehmung oder in eine Nut eingreift.

Fig. 10a und Fig. 10b zeigen ein weiteres Ausführungsbeispiel für ein Adapterflanschelement, wobei für gleiche oder gleichwirkende Bauelemente dieselben Bezugszeichen wir für das in Fig. 8 gezeigte Adapterflanschelement 2 gewählt werden. Das entsprechende Adapterflanschelement 3 kann gleich wie das gezeigte Adapterflanschelement 2 aufgebaut sein. In Fig. 10a und Fig. 10b sind ein erstes Teilringelement 21 sowie ein zweites Teilringelement 22 gezeigt. Die Verbindungselemente 24 zur Verbindung des ersten Teilringelements 21 mit dem zweiten Teilringelement 22 sind nicht gezeigt, es kann sich um eine Schraubverbindung handeln. In dieser vereinfachten Darstellung ist nur je eine Bohrung 29 für eine Schraube gezeigt. Alternativ könnte auch eine Rastverbindung vorgesehen werden, beispielsweise ähnlich wie in Fig. 9 gezeigt.

Vom Ventilgehäuse 10 ist in Fig. 10a nur ein Teil des Einlassstutzens 11 gezeigt. Der Einlassstutzen 11 weist einen Anschlag 20 auf, der als ein Flanschelement ausgebildet ist. Das Adapterflanschelement 2 liegt auf dem Anschlag 20 des Einlassstutzens 11 auf. Das Adapterflanschelement 2 umfasst mindestens ein erstes Teilringelement 21 und ein zweites Teilringelement 22. Gemäss dieses Ausführungsbeispiels ist der Anschlag 20 in einer umlaufenden Nut des ersten Teilringelements 21 sowie des zweiten Teilringelements 22 aufgenommen. Das Adapterflanschelement 2 weist gemäss dieses Ausführungsbeispiels ein Übergangsstück 50 auf, das verwendet wird, um ein Rohr 9 mit einem grösseren Innendurchmesser an eine Fluideintrittsöffnung 15 mit einem geringeren Innendurchmesser zu koppeln. Das Übergangsstück 50 weist einen konischen Abschnitt auf.

Fig. 10b zeigt eine Ansicht des Adapterflanschelements 2 entgegen der Fliessrichtung des durch die Fluideintrittsöffnung 15 in das Ventilgehäuse 10 einströmenden Fluids. Das erste Teilringelement 21 weist ein erstes Ende 25 und ein zweites Ende 26 auf, wobei das zweite Ende in dieser Darstellung nicht sichtbar ist. Das zweite Teilringelement 22 weist ein erstes Ende 27 und ein zweites Ende 28 auf, wobei das erste Ende 27 in dieser Darstellung nicht sichtbar ist. Wie in Fig. 8 gezeigt, ist ein erster Absatz 45 am ersten Ende und je ein zweiter Absatz 46 ist am zweiten Ende des ersten Teilringelements 21 angeordnet. Je ein erster Absatz 47 ist in der Nähe des ersten Endes 27 und je ein zweiter Absatz 48 ist in der Nähe des zweiten Endes 28 des zweiten Teilringelements 22 angeordnet.

Gemäss des vorliegenden Ausführungsbeispiels befindet sich in jedem der Endbereiche zwischen den Enden und den zugehörigen Absätzen eine Bohrung 29, welche mit der jeweiligen Bohrung des korrespondierenden Endbereichs des anderen Teilringelements fluchtet, wenn das erste und zweite Teilringelement 21, 22 derart angeordnet sind, dass sie insgesamt einen Kreisring ergeben. Ein Verbindungselement 24 ist zur Verbindung des ersten Endbereichs des ersten Teilringelements 21 mit dem ersten Endbereich des zweiten Teilringelements 22 vorgesehen, welches die beiden übereinander liegenden Endbereiche durch die darin befindlichen Bohrungen miteinander verbindet. Ein weiteres Verbindungselement 24 ist zur Verbindung des zweiten Endbereichs des ersten Teilringelements 21 mit dem zweiten Endbereich des zweiten Teilringelements 22 vorgesehen, welches die beiden übereinander liegenden Endbereiche durch die darin befindlichen Bohrungen miteinander verbindet. Das Verbindungselement 24 kann beispielsweise als eine Schraube ausgebildet sein. Gemäss des vorliegenden Ausführungsbeispiels sind zwei Verbindungselemente 24 vorgesehen, es könnten aber auch mehr als zwei Verbindungselemente und auch mehr als zwei Teilringelemente verwendet werden. Anstelle einer Mutter, wie in den vorhergehenden Ausführungsbeispielen gezeigt, könnte auch der rohrnähere Endbereich jedes der ersten und zweiten Teilringelemente eine Gewindebohrung enthalten, in welche die Schraube eingeschraubt werden kann. Diese Variante hat den Vorteil, dass der Rohrflansch 90, der in Fig. 10a gezeigt ist, flächig auf der Aussenseite des Adapterflanschelements aufliegen kann. Allfällige Dichtungselemente, welche vorgesehen sein können, um eine Leckage zwischen dem Rohrflansch 90 und dem Adapterflanschelement 2 zu verhindern, sind aus Gründen der verbesserten Übersicht weggelassen.

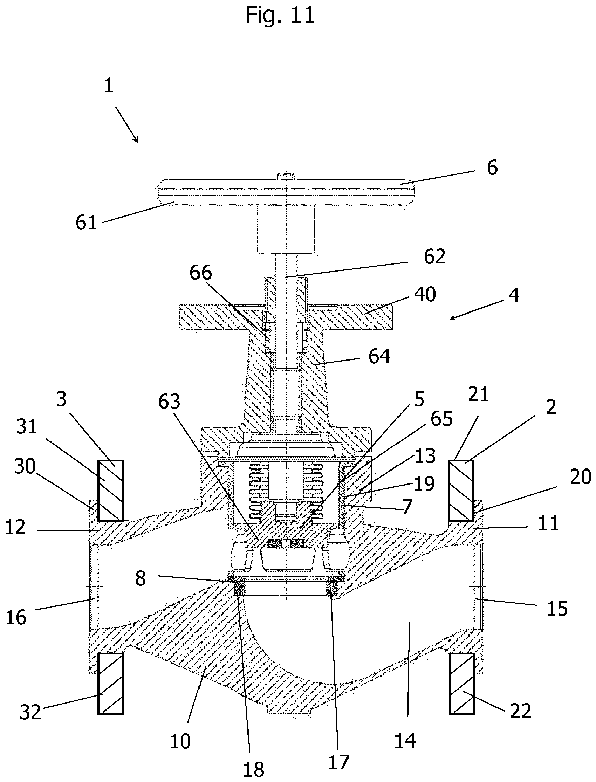

Fig. 11 zeigt einen Schnitt durch ein Ventil gemäss eines zweiten Ausführungsbeispiels, wobei für gleiche oder gleichwirkende Bauelemente dieselben Bezugszeichen verwendet werden wie in den vorhergehenden Ausführungsbeispielen. Das Ventil 1 enthält ein Ventilgehäuse 10. Das Ventilgehäuse 10 enthält einen Einlassstutzen 11, einen Auslassstutzen 12 sowie einen Anschlussstutzen 13. Im Einlassstutzen ist eine Fluideintrittsöffnung 15 angeordnet, im Auslassstutzen ist eine Fluidaustrittsöffnung 16 angeordnet. Im Inneren des Ventilgehäuses 10 erstreckt sich ein Fluidkanal 14 von der Fluideintrittsöffnung 15 zur Fluidaustrittsöffnung 16. Im Fluidkanal 14 ist ein Ventilsitz 17 angeordnet, wobei der Fluidkanal 14 mittels eines durch den Anschlussstutzen 13 geführten Schliesselements 4 verschliessbar ist, wenn das Schliesselement 4 auf dem Ventilsitz 17 aufliegt. Zumindest einer der Einlass- oder Auslassstutzen 11, 12 kann ein Adapterflanschelement 2, 3, welches vom Ein- oder Auslassstutzen 11, 12 abnehmbar ist, wie es in den vorhergehenden Ausführungsbeispielen beschrieben worden ist.

Das Adapterflanschelement 2 ist von einem Anschlag 20 des Einlassstutzens 11 gehalten. Das Adapterflanschelement 3 ist von einem Anschlag 30 des Auslassstutzens 12 gehalten. Die Adapterflanschelemente 2, 3 bleiben im zusammengebauten Zustand mit dem Ventilgehäuse 10 verbunden. Insbesondere sind die Adapterflanschelemente 2, 3 auf der Seite der Fluideintrittsöffnung bzw. Fluidaustrittsöffnung angeordnet, welche einem an die Fluideintrittsöffnung bzw. Fluidaustrittsöffnung angeschlossenen Rohr gegenüberliegt. Somit sind die Adapterflanschelemente 2, 3 durch den Anschlag 20, 30 auf dem Ventilgehäuse 10 gehalten und können in zusammengebautem Zustand nicht verloren gehen.

Gemäss des vorliegenden Ausführungsbeispiels enthält sowohl das Adapterflanschelement 2 ein erstes Teilringelement 21 und ein zweites Teilringelement 22. Auch das Adapterflanschelement 3 enthält ein erstes Teilringelement 31 und ein zweites Teilringelement 32, welche auf der Innenseite des zugehörigen Einlass- bzw. Auslassstutzens 11, 12 angeordnet sind. Die ersten und zweiten Teilringelemente 21, 22, 31, 32 sind für die Montage und Demontage des entsprechenden Adapterflanschelements 2, 3 am Ventilgehäuse 10 erforderlich.

Das Adapterflanschelement 2 und das Adapterflanschelement 3 enthalten eine Mehrzahl von Bohrungen 23, 33 die zur Verbindung mit einem Flansch eines an das Ventil anschliessenden Rohrs ausgebildet sind. Die Teilringelemente 21, 22 des Adapterflanschelements 2 sind, wie in Zusammenhang mit Fig. 1 für das Adapterflanschelement 3 beschrieben, derart miteinander koppelbar, dass die an den ersten und zweiten Endbereiche der Teilringelemente anschliessenden Absätze aufeinander aufliegen, sodass die zugehörigen Bohrungen fluchtend zueinander angeordnet sind, sodass ein Verbindungselement 34 durch die Bohrungen hindurchführbar ist.

Gemäss des vorliegenden Ausführungsbeispiels entspricht der Innenradius der Teilringelemente 21, 22 im Wesentlichen dem Aussendurchmesser des Einlassstutzens 11. Der Aussenradius der Teilringelemente 21, 22 und somit der Aussendurchmesser des Adapterflanschelements 2 ist entsprechend dem zugehörigen Rohrflansch auswählbar. Der Innenradius der Teilringelemente 31, 32 entspricht im Wesentlichen dem Aussendurchmesser des Auslassstutzens 12. Der Aussenradius der Teilringelemente 31, 32 und somit der Aussendurchmesser des Adapterflanschelements 3 ist entsprechend dem zugehörigen Rohrflansch auswählbar.

Insbesondere können der Einlassstutzen 11 bzw. der Auslassstutzen 12 mit Adapterflanschelementen 2, 3 mit unterschiedlichen Aussendurchmessern oder unterschiedlichen Dicken koppelbar sein, was zeichnerisch nicht dargestellt ist. Das Ventil kann somit für verschiedene Rohrabmessungen verwendet werden, weil es durch Auswahl des geeigneten Adapterflanschelements 2, 3 an Rohrflansche mit unterschiedlichen Dimensionen angepasst werden kann. Insbesondere kann das Ventil für Rohrflansche mit unterschiedlichem Aussendurchmesser, unterschiedlicher Dicke, unterschiedlicher Anzahl an Bohrungen für Verbindungselemente, unterschiedlicher Anordnung der Bohrungen oder unterschiedlicher Grösse der Bohrungen zum Einsatz kommen. Mit der Dicke ist insbesondere die Dicke des Flanschblatts des Adapterflanschelements gemeint.

In Fig. 11 ist auch ein Schnitt durch den Anschlussstutzen 13 gezeigt. Der Anschlussstutzen 13 enthält eine Absperrvorrichtung 4. Die Absperrvorrichtung 4 enthält ein Schliesselement 5 sowie eine Betätigungsvorrichtung 6 für das Schliesselement 5. Gemäss des vorliegenden Ausführungsbeispiels umfasst die Betätigungsvorrichtung 6 eine Antriebseinheit 61, welches mit einem Stangenelement 62 verbunden ist. Das Stangenelement 62 enthält gemäss dieses Ausführungsbeispiels ein Aussengewinde, welches in ein korrespondierendes Innengewinde eingreift, welches in einem Mantelelement 64 angeordnet ist. Das Mantelelement 64 ist gemäss des vorliegenden Ausführungsbeispiels auf dem Anschlussstutzen 13 aufgesetzt und mit diesem fluiddicht verbunden.

Die Antriebseinheit 61 ist somit an einem Ende des Stangenelements 62 angebracht, an deren gegenüberliegenden Ende befindet sich ein Schliesselement 5, welches gemäss dieses Ausführungsbeispiels als Kolbenelement 63 ausgebildet ist. Das Schliesselement 5 ist in einer Bohrung 19 des Anschlussstutzens 13 verschiebbar gelagert. In dieser Bohrung 19 ist gemäss dieses Ausführungsbeispiels ein Hülsenelement 7 angeordnet. Das Hülsenelement 7 ermöglicht die präzise Führung des Schliesselements 5, insbesondere in der Schliessstellung desselben. Das Hülsenelement 7 ist an der Innenwand des Anschlussstutzens 13 angeordnet.

Das Hülsenelement 7 dient auch zum Schutz des ersten Umgebungsdichtungselements 65 vor Stössen, die durch das strömende Fluid verursacht werden können und hält das erste Fluiddichtungselement 8 in seiner Position auf dem Ventilsitz 17. Die Bohrung 19 wird von der Innenwand des Anschlussstutzens 13 ausgebildet. Das Hülsenelement 7 enthält Öffnungen, sodass das durch den Fluidkanal 14 strömende Fluid im geöffneten Zustand des Schliesselements 5 nicht auf das erste Umgebungsdichtungselement 65 auftrifft, sondern unterhalb der Auflagefläche des Schliesselements 5 hindurchströmt.

Das Hülsenelement 7 kann insbesondere als ein dünnwandiges Zylinderelement ausgebildet sein. Das Hülsenelement 7 enthält ein Mantelelement, wobei das Mantelelement an seinem ersten Ende und an seinem zweiten Ende je eine Endöffnung aufweist. Das Hülsenelement 7 kann in einem Endbereich in der Nähe des ersten Endes einen Flansch aufweisen, der im eingebauten Zustand auf einem entsprechenden Absatz des Anschlussstutzens 13 aufliegt. Die Endöffnung des Mantelelements am ersten Ende des Hülsenelements 7 wird vom Flansch umrahmt. Das zweite Ende des Mantelelements liegt gemäss eines nicht dargestellten Ausführungsbeispiels unmittelbar auf dem Ventilsitz 17 oder gemäss Fig. 2 auf dem ersten Fluiddichtungselement 8 auf.

Das Hülsenelement 7 enthält mindestens eine seitliche Öffnung im Mantelelement, sodass ein Fluid durch diese seitliche Öffnung in den Innenraum des Hülsenelements 7 eintreten kann und diesen durch die am zweiten Ende angeordnete Endöffnung des Hülsenelements 7 verlassen kann, wie in Fig. 11 sichtbar. Alternativ kann das Mantelelement mehrere seitliche Öffnungen enthalten, was ebenfalls in Fig. 11 gezeigt ist.

In Fig. 11 ist der geöffnete Zustand des Schliesselements 5 gezeigt, das heisst, das Schliesselement 5 liegt nicht auf dem im Ventilgehäuse 10 befindlichen Ventilsitz 17 oder einem darauf befindlichen ersten Fluiddichtungselement 8 auf. Der Abstand des Schliesselements 5 vom Ventilsitz 17 bzw. dem ersten Fluiddichtungselement 8 kann durch die Betätigungsvorrichtung 6 eingestellt werden. Daher ist das in Fig. 11 dargestellte Ventil als Regelungsventil ausgebildet.

Das erste Fluiddichtungselement 8 ist auf dem Ventilsitz 17 angeordnet. Zudem befindet sich gemäss dieses Ausführungsbeispiels das zweite Fluiddichtungselement 18 auf dem Ventilsitz 17. Gemäss des vorliegenden Ausführungsbeispiels liegt das erste Fluiddichtungselement 8 auf dem zweiten Fluiddichtungselement 18 auf. Das erste Fluiddichtungselement 8 ist mit einer radialen Auflagefläche des Schliesselements 5 in Kontakt, wenn die Absperrvorrichtung 4 geschlossen ist. Das zweite Fluiddichtungselement 18 liegt auf einer sich in axialer Richtung erstreckenden Auflagefläche des Schliesselements 5 auf. Das Schliesselement 5 gemäss des vorliegenden Ausführungsbeispiels umfasst somit eine radiale Endfläche, eine sich in axialer Richtung an die Endfläche anschliessende axiale Auflagefläche, die als Mantelfläche ausgebildet ist, sowie eine an die Mantelfläche anschliessende radiale Auflagefläche auf. Somit weist das Schliesselement einen Absatz auf. Das erste Fluiddichtungselement 8 kommt im geschlossenen Zustand der Absperrvorrichtung 4 auf die radiale Auflagefläche des Schliesselements 5 zu liegen und das zweite Fluiddichtungselement 18 kommt im geschlossenen Zustand auf die Mantelfläche des Schliesselements 5 zu liegen.

Die Betätigungsvorrichtung 6 wird mittels des ersten Umgebungsdichtungselements 65 gegen den Eintritt des durch den Fluidkanal 14 strömenden fluiden Mediums abgedichtet. Gemäss des vorliegenden Ausführungsbeispiels ist das erste Umgebungsdichtungselement 65 auf dem Stangenelement 62 zwischen dem Mantelelement 64 und dem Auslassstutzen 13 angeordnet. Das erste Umgebungsdichtungselement 65 liegt dichtend am Schliesselement 5 an und wird zwischen dem Anschlussstutzen 13 und einem Halteelement für die Betätigungsvorrichtung 6 eingeklemmt, wobei gemäss dieses Ausführungsbeispiels das Mantelelement 64 als Halteelement ausgebildet ist. Das erste Umgebungsdichtungselement 65 kann insbesondere ein elastisches Material enthalten, sodass es sich der Länge der in den Fluidkanal 14 ragenden Betätigungsvorrichtung 6 anpassen kann. Beispielsweise kann das erste Umgebungsdichtungselement 65 einen elastischen Schlauch umfassen. Alternativ kann, wie im vorhergehenden Ausführungsbeispiel gezeigt, eine Buchse mit einer Wellenform vorgesehen sein, beispielsweise ein Faltenbalg. Die Buchse kann elastisch verformbar sein. Unter einer elastischen Verformung wird eine reversible Verformung verstanden, das heisst, dass sich die Buchse bei einer Verlängerung verformt, um die Längenänderung auszugleichen, die Verformung bei einer Verkürzung der Buchse wieder rückgängig gemacht wird. Gemäss des vorliegenden Ausführungsbeispiels setzt das erste Umgebungsdichtungselement 65 der Verschiebebewegung der Betätigungsvorrichtung 6 keinen nennenswerten Widerstand entgegen.

Zusätzlich enthält die Betätigungsvorrichtung 6 ein zweites Umgebungsdichtungselement 66. Das zweite Umgebungsdichtungselement kann als ringförmiges Dichtungselement, beispielsweise als Stopfbuchsenelement, Radialwellendichtring oder O-Ring ausgebildet sein. Die Betätigungsvorrichtung 6 kann somit am Stangenelement 62 mittels des zweiten Umgebungsdichtungselements 66, das zwischen dem Gewindeabschnitt und der Antriebseinheit 61, beispielsweise einem Handrad, angeordnet ist, nach aussen abgedichtet werden, um beispielsweise den Austritt von Schmiermitteln zu verhindern. Gemäss dieses Ausführungsbeispiels weist das Stangenelement 62 keinen Kontakt mit dem Fluid auf, welches durch den Fluidkanal 14 strömt, wenn die Verbindung zwischen der Fluideintrittsöffnung 15 und der Fluidaustrittsöffnung 16 geöffnet ist.

Gemäss eines nicht dargestellten Ausführungsbeispiels kann das Schliesselement 5 mittels einer Betätigungsvorrichtung 6 betätigt werden, welche als ein hydraulisch oder pneumatisch betätigbarer Antrieb ausgebildet ist. Alternativ kann eine Betätigungsvorrichtung 6 zum Einsatz kommen, die einen elektrischen Antrieb aufweist. Die Betätigungsvorrichtung 6 kann wie im vorliegenden Ausführungsbeispiel manuell verstellbar sein. Alternativ kann eine Regelungseinheit vorgesehen sein, mittels welcher das Schliesselement 5 ohne manuellen Eingriff verstellbar ist, indem eine hydraulische, pneumatische oder elektrische Antriebsvorrichtung für die Betätigungsvorrichtung 6 betätigt wird.

Auch das Mantelelement 64 kann einen Anschlag 40 enthalten, der ein nicht dargestelltes Adapterflanschelement aufnehmen kann. Das Adapterflanschelement kann den in den vorgehend beschriebenen Ausführungsbeispielen entsprechen.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Ventil (1), enthaltend ein Ventilgehäuse (10), wobei das Ventilgehäuse (10) einen Einlassstutzen (11), einen Auslassstutzen (12), einen Anschlussstutzen (13) für eine Absperrvorrichtung (4) enthält, wobei die Absperrvorrichtung (4) eine Betätigungsvorrichtung (6) und ein Schliesselement (5) enthält, wobei eine Fluideintrittsöffnung (15) im Einlassstutzen (11) angeordnet ist, wobei eine Fluidaustrittsöffnung (16) im Auslassstutzen (12) angeordnet ist, wobei sich im Inneren des Ventilgehäuses (10) ein Fluidkanal (14) von der Fluideintrittsöffnung (15) zur Fluidaustrittsöffnung (16) erstreckt, wobei im Fluidkanal (14) ein Ventilsitz (17) angeordnet ist, sodass der Fluidkanal (14) mittels des durch den Anschlussstutzen (13) geführten Schliesselements (5) verschliessbar ist, wenn das Schliesselement (5) auf dem Ventilsitz (17) aufliegt, **dadurch gekennzeichnet, dass** zumindest einer der Einlass- oder Auslassstutzen (11, 12) ein Adapterflanschelement (2, 3) enthält, welches vom Ein- oder Auslassstutzen (11, 12) abnehmbar ist.

2. Ventil nach Anspruch 1, wobei das Adapterflanschelement (2, 3) eine Mehrzahl von Bohrungen (23, 33) enthält, die zur Verbindung mit einem Flansch einer an das Ventil anschliessenden Rohrleitung ausgebildet sind.

3. Ventil nach einem der Ansprüche 1 oder 2, wobei das Adapterflanschelement (2, 3) ein erstes Teilringelement (21, 31) und ein zweites Teilringelement (22, 32) enthält, welche den Einlass- bzw. Auslassstutzens umgeben.

4. Ventil nach Anspruch 3, wobei das Teilringelement (21, 22, 31, 32) ein erstes Ende (25, 27, 35, 37) und ein zweites Ende (26, 28, 36, 38) aufweist, wobei ein Endbereich an das erste Ende bzw. das zweite Ende anschliesst, wobei der Endbereich auf der dem ersten bzw. zweiten Ende gegenüberliegenden Seite von einem Absatz (45, 46, 47, 48, 55, 56, 57, 58) begrenzt wird.

5. Ventil nach Anspruch 4, wobei der Endbereich eine Bohrung (29, 39, 49, 59) enthält.

6. Ventil nach Anspruch 5, wobei die Teilringelemente (21, 22, 31, 32) derart miteinander koppelbar sind, dass gegenüberliegende Endbereiche aufeinander aufliegen, sodass die zugehörigen Bohrungen (29, 39, 49, 59) fluchtend zueinander angeordnet sind, sodass ein Verbindungselement (24, 34) durch die Bohrungen hindurchführbar ist.

7. Ventil nach Anspruch 6, wobei das Verbindungselement (24, 34) als eine Schraube mit zugehöriger Mutter ausgebildet ist.

8. Ventil nach einem der vorhergehenden Ansprüche, wobei der Innendurchmesser des Adapterflanschelements (2, 3) im Einbauzustand im Wesentlichen dem Aussendurchmesser des Einlassstutzens (11) bzw. des Auslassstutzens (12) entspricht.

9. Ventil nach einem der vorhergehenden Ansprüche, wobei der Aussendurchmesser des Adapterflanschelements (2, 3) zur Koppelung mit einem zugehörigen Rohrflansch (90) anpassbar ist.

10. Ventil nach einem der vorhergehenden Ansprüche, wobei der Einlassstutzen (11) bzw. der Auslassstutzen (12) mit Adapterflanschelementen (2, 3) mit unterschiedlichen Aussendurchmessern oder unterschiedlichen Dicken koppelbar ist.

11. Ventil nach einem der vorhergehenden Ansprüche, wobei der Einlassstutzen (11) und/oder der Auslassstutzen (12) einen Anschlag (20, 30) aufweist.

12. Ventil nach einem der vorhergehenden Ansprüche, wobei die Dicke des Adapterflanschelements (2, 3) zur Koppelung mit einem zugehörigen Rohrflansch (90) anpassbar ist.

13. Ventil nach einem der vorhergehenden Ansprüche, wobei das Adapterflanschelement (2, 3) Bohrungen (23, 33) zur Koppelung mit einem zugehörigen Rohrflansch (90) aufweist.

14. Ventil nach Anspruch 13, wobei der Durchmesser der Bohrung (23, 33) an den zugehörigen Rohrflansch angepasst ist.
